# EUROPEAN PATENT APPLICATION

(11) **EP 2 851 871 A2**
(43) Date of publication of application: **25.03.2015**
(21) Application number: 14185579.1
(22) Date of filing: 19.09.2014
(51) Int. Cl.: G06T 11/00, G01V 1/34

(54) **Georeferenced bookmark data**

(30) Priority: 20.09.2013 US 201314033404
(71) Applicant: Services Petroliers Schlumberger, 75007 Paris (FR); Logined B.V., 2586 BJ S Gravenhage (NL)
(72) Inventor: Engelkemeir, Richard, Houston, TX Texas 77083 (US)
(74) Representative: Li, Boxi

(57) **Abstract**

A method, apparatus, and program product manage georeferenced bookmarks. Responsive to receiving a request to store a bookmark for a visualization of geological and geophysical data, an affine transformation that maintains an aspect ratio of the visualization is determined. A georeferenced image for the visualization is generated based at least in part on the affine transformation, and a georeferenced bookmark including the georeferenced image is generated.

## Description

### Background

Geological and geophysical data may be interpreted by geologists and geophysicists (users) using specialized software. The geological and geophysical data may be stored in a database, which may be processed by a processing system executing the specialized software. The software may, according to user inputs, retrieve data from the database and create visualizations, according to a user's preferences and interpretations. The visualizations may aid in identifying certain attributes within the data that may indicate the presence of hydrocarbons. The process of creating the visualizations may be tedious for the user, involving many steps to achieve a particular state of visualization/interpretation.

In general, a need continues to exist in the art for improved systems, methods, and program products for analyzing and managing such geological and geophysical production data.

### Summary

Embodiments of the invention disclosed herein provide a method, apparatus, and program product that manage georeferenced bookmarks corresponding to a visualization of geophysical and geological data. Consistent with embodiments of the invention, in response to receiving a request to store a bookmark for the visualization of geophysical and geological data, an affine transformation that maintains an aspect ratio of the visualization is determined. A georeferenced image for the visualization is generated based at least in part on the affine transformation, where the georeferenced image maintains the aspect ratio of the visualization. A georeferenced bookmark including the georeferenced image is generated.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there is described example embodiments of the invention. This summary is merely provided to introduce a selection of concepts that are further described below in the detailed description, and is not intended to identify key or essential features of the claimed subject matter, nor is it intended to be used as an aid in limiting the scope of the claimed subject matter.

### Brief Description of the Drawings

FIGURE 1 is a block diagram of an example hardware and software environment for a data processing system in accordance with implementation of various technologies and techniques described herein.
FIGURES 2A-2D illustrate simplified, schematic views of an oilfield having subterranean formations containing reservoirs therein in accordance with implementations of various technologies and techniques described herein.
FIGURE 3 illustrates a schematic view, partially in cross section of an oilfield having a plurality of data acquisition tools positioned at various locations along the oilfield for collecting data from the subterranean formations in accordance with implementations of various technologies and techniques described herein.
FIGURE 4 illustrates a production system for performing one or more oilfield operations in accordance with implementations of various technologies and techniques described herein.
FIGURE 5 provides a flowchart that illustrates a sequence of operations that may be performed by the data processing system of FIGURE 1 to generate a georeferenced bookmark.
FIGURE 6 provides a flowchart that illustrates a sequence of operations that may be performed by the data processing system of FIGURE 1 to determine an affine transformation.
FIGURE 7 provides a block diagram of a georeferenced bookmark that may be generated by the data processing system of FIGURE 1.
FIGURE 8 provides a flowchart that illustrates a sequence of operations that may be performed by the data processing system of FIGURE 1 to generate a georeferenced bookmark.
FIGURE 9 provides a flowchart that illustrates a sequence of operations that may be performed by the data processing system of FIGURE 1 to restore a visualization based on a georeferenced bookmark.

### Detailed Description

The herein-in described embodiments of the invention provide a method, apparatus, and program product that may generate and/or restore a georeferenced bookmark corresponding to a visualization of geophysical and geological data. Further details regarding bookmarks may be found in U.S. Pat. Pub. No. 2010/0251135 filed May 7, 2009 by Jain et al., which is incorporated herein in its entirety. Consistent with embodiments of the invention a georeferenced bookmark includes a georeferenced image of the visualization, where the georeferenced image includes data that establishes the spatial positioning of the georeferenced image in a spatial view.

Other variations and modifications will be apparent to one of ordinary skill in the art.

### Hardware and Software Environment

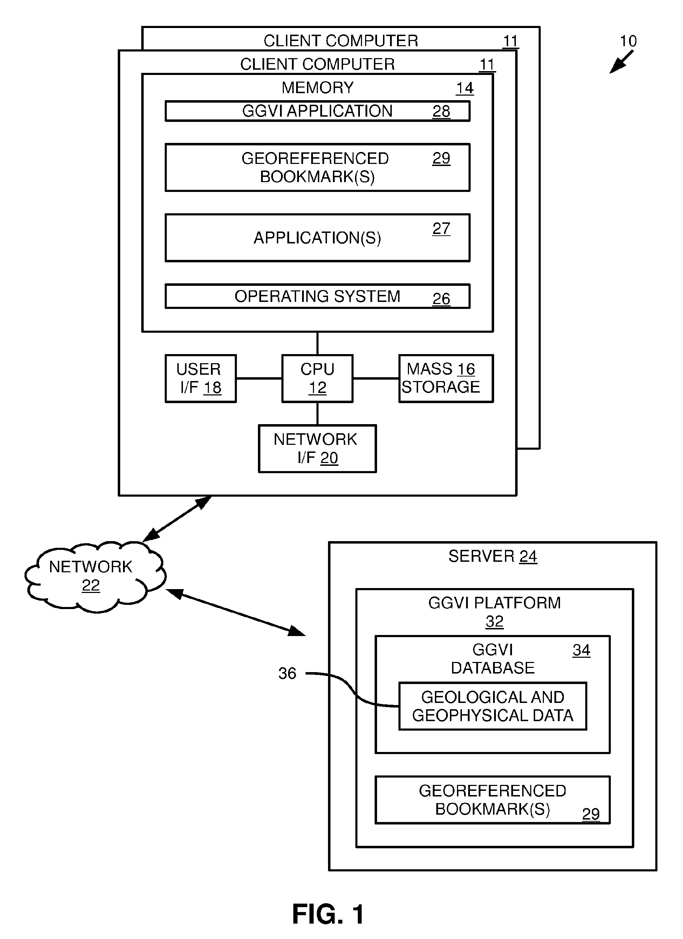

Turning now to the drawings, wherein like numbers denote like parts throughout the several views, Fig. 1 illustrates an example data processing system 10 in which the various technologies and techniques described herein may be implemented. System 10 is illustrated as including one or more computers 11, e.g., client computers, each including a central processing unit 12 including at least one hardware-based microprocessor coupled to a memory 14, which may represent the random access memory (RAM) devices comprising the main storage of a computer 11, as well as any supplemental levels of memory, e.g., cache memories, non-volatile or backup memories (e.g., programmable or flash memories), read-only memories, etc. In addition, memory 14 may be considered to include memory storage physically located elsewhere in a computer 11, e.g., any cache memory in a microprocessor, as well as any storage capacity used as a virtual memory, e.g., as stored on a mass storage device 16 or on another computer coupled to a computer 11.

Each computer 11 also generally receives a number of inputs and outputs for communicating information externally. For interface with a user or operator, a computer 11 generally includes a user interface 18 incorporating one or more user input devices, e.g., a keyboard, a pointing device, a display, a printer, etc. Otherwise, user input may be received, e.g., over a network interface 20 coupled to a network 22, from one or more servers 24. A computer 11 also may be in communication with one or more mass storage devices 16, which may be, for example, internal hard disk storage devices, external hard disk storage devices, storage area network devices, etc.

A computer 11 generally operates under the control of an operating system 26 and executes or otherwise relies upon various computer software applications 27, components, programs, objects, modules, data structures, etc. For example, a geological and geophysical visualization interpretation (GGVI) application 28 may be used to visualize and interpret geological and geophysical data. Geologists and geophysicists (users) may use a GGVI application 28 to view and interpret seismic and borehole data about a subsurface of the earth. The GGVI application 28 may interface with a GGVI platform 32, which may include a GGVI database 34 within which may be stored geological and geophysical data 36. For example, the geological and geophysical data 36 may correspond to one or more oilfields of an oil and gas production system. The GGVI platform 32 and/or database 34 may be implemented using multiple servers 24 in some implementations, and it will be appreciated that each server 24 may incorporate processors, memory, and other hardware components similar to a client computer 11. In addition, in some implementations platform 32 may be implemented within a database.

In one non-limiting embodiment, for example, GGVI application 28 and/or the GGVI platform 32 may be compatible with the GeoFrame software platform, including GeoFrame Basemap, which is available from Schlumberger Ltd. and its affiliates. It will be appreciated, however, that the techniques discussed herein may be utilized in connection with other petro-technical applications/platforms, so the invention is not limited to the particular software platforms and environments discussed herein. Moreover, those skilled in the art will appreciate that various operations and/or functionality of the GGVI application 28 and/or the GGVI platform 32 may be implemented on one or more client computers 11 and/or servers 24.

Consistent with embodiments of the invention, during execution of the GGVI application 28 by the client computer 11, a user may wish to store a bookmark that corresponds to a visualization of geological and geographical data generated by the GGVI application 28, and the client computer 11 may generate a georeferenced bookmark 29 corresponding to the visualization of geological and geographical data generated by the GGVI application 28. Consistent with embodiments of the invention, "georeferenced" generally indicates that the bookmark/image defines the existence of the visualization in physical space, in terms of map projections or coordinate systems. For example, an image of one or more oil wells of an oil field may be georeferenced when the correct positioning of the oil wells is tied to coordinates of a map of the oil field. In general, a georeferenced bookmark 29 may include a georeferenced image corresponding to the visualization, a thumbnail image associated with the georeferenced image, and one or more saved settings corresponding to the GGVI application 28.

As shown, a georeferenced bookmark 29 may be stored in the memory 14 of the client computer 11 and/or a server 24. In general, a georeferenced bookmark 29 may be representative of a state of displayed visualization of geophysical and geological data, where the georeferenced bookmark includes a georeferenced image of the visualization. Consistent with embodiments of the invention, the GGVI application 28 may be restored to a state of a particular displayed visualization stored by a particular georeferenced bookmark 29, including restoring a georeferenced image of the particular georeferenced bookmark 29.

In general, the routines executed to implement the embodiments disclosed herein, whether implemented as part of an operating system or a specific application, component, program, object, module or sequence of instructions/operations, or even a subset thereof, will be referred to herein as "computer program code," or simply "program code." Program code generally comprises one or more instructions that are resident at various times in various memory and storage devices in a computer, and that, when read and executed by one or more processors in a computer, cause that computer to perform the operations embodying desired functionality. Moreover, while embodiments have and hereinafter will be described in the context of fully functioning computers and computer systems, those skilled in the art will appreciate that the various embodiments are capable of being distributed as a program product in a variety of forms, and that the invention applies equally regardless of the particular type of computer readable media used to actually carry out the distribution.

Such computer readable media may include computer readable storage media and communication media. Computer readable storage media is non-transitory in nature, and may include volatile and non-volatile, and removable and non-removable media implemented in any method or technology for storage of information, such as computer-readable instructions, data structures, program modules or other data. Computer readable storage media may further include RAM, ROM, erasable programmable read-only memory (EPROM), electrically erasable programmable read-only memory (EEPROM), flash memory or other solid state memory technology, CD-ROM, DVD, or other optical storage, magnetic cassettes, magnetic tape, magnetic disk storage or other magnetic storage devices, or any other medium that can be used to store the desired information and which can be accessed by computer 10. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

Various program code described hereinafter may be identified based upon the application within which it is implemented in a specific embodiment of the invention. However, it should be appreciated that any particular program nomenclature that follows is used merely for convenience, and thus the invention should not be limited to use solely in any specific application identified and/or implied by such nomenclature. Furthermore, given the countless manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the invention is not limited to the specific organization and allocation of program functionality described herein.

Those skilled in the art will recognize that the example environment illustrated in Fig. 1 is not intended to limit the invention. Indeed, those skilled in the art will recognize that other alternative hardware and/or software environments may be used without departing from the scope of the invention.

### Oilfield Operations

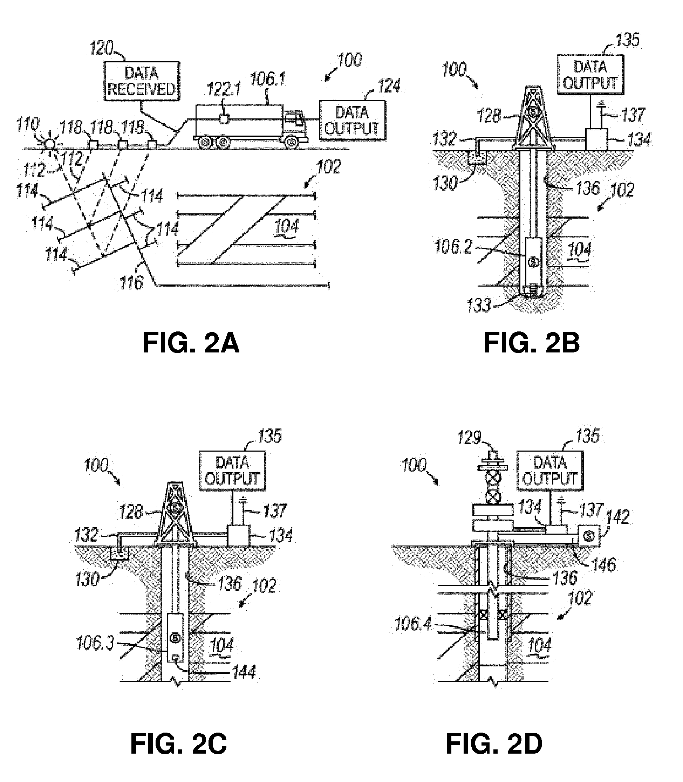

Figs. 2a-2d illustrate simplified, schematic views of an oilfield 100 having subterranean formation 102 containing reservoir 104 therein in accordance with implementations of various technologies and techniques described herein. Fig. 2a illustrates a survey operation being performed by a survey tool, such as seismic truck 106.1, to measure properties of the subterranean formation. The survey operation is a seismic survey operation for producing sound vibrations. In Fig. 2a, one such sound vibration, sound vibration 112 generated by source 110, reflects off horizons 114 in earth formation 116. A set of sound vibrations is received by sensors, such as geophone-receivers 118, situated on the earth's surface. The data received 120 is provided as input data to a computer 122.1 of a seismic truck 106.1, and responsive to the input data, computer 122.1 generates seismic data output 124. This seismic data output may be stored, transmitted or further processed as desired, for example, by data reduction.

Fig. 2b illustrates a drilling operation being performed by drilling tools 106.2 suspended by rig 128 and advanced into subterranean formations 102 to form wellbore 136. Mud pit 130 is used to draw drilling mud into the drilling tools via flow line 132 for circulating drilling mud down through the drilling tools, then up wellbore 136 and back to the surface. The drilling mud is generally filtered and returned to the mud pit. A circulating system may be used for storing, controlling, or filtering the flowing drilling muds. The drilling tools are advanced into subterranean formations 102 to reach reservoir 104. Each well may target one or more reservoirs. The drilling tools are adapted for measuring downhole properties using logging while drilling tools. The logging while drilling tools may also be adapted for taking core sample 133 as shown.

Computer facilities may be positioned at various locations about the oilfield 100 (e.g., the surface unit 134) and/or at remote locations. Surface unit 134 may be used to communicate with the drilling tools and/or offsite operations, as well as with other surface or downhole sensors. Surface unit 134 is capable of communicating with the drilling tools to send commands to the drilling tools, and to receive data therefrom. Surface unit 134 may also collect data generated during the drilling operation and produces data output 135, which may then be stored or transmitted.

Sensors (S), such as gauges, may be positioned about oilfield 100 to collect data relating to various oilfield operations as described previously. As shown, sensor (S) is positioned in one or more locations in the drilling tools and/or at rig 128 to measure drilling parameters, such as weight on bit, torque on bit, pressures, temperatures, flow rates, compositions, rotary speed, and/or other parameters of the field operation. Sensors (S) may also be positioned in one or more locations in the circulating system.

Drilling tools 106.2 may include a bottom hole assembly (BHA) (not shown), generally referenced, near the drill bit (e.g., within several drill collar lengths from the drill bit). The bottom hole assembly includes capabilities for measuring, processing, and storing information, as well as communicating with surface unit 134. The bottom hole assembly further includes drill collars for performing various other measurement functions.

The bottom hole assembly may include a communication subassembly that communicates with surface unit 134. The communication subassembly is adapted to send signals to and receive signals from the surface using a communications channel such as mud pulse telemetry, electro-magnetic telemetry, or wired drill pipe communications. The communication subassembly may include, for example, a transmitter that generates a signal, such as an acoustic or electromagnetic signal, which is representative of the measured drilling parameters. It will be appreciated by one of skill in the art that a variety of telemetry systems may be employed, such as wired drill pipe, electromagnetic or other known telemetry systems.

Generally, the wellbore is drilled according to a drilling plan that is established prior to drilling. The drilling plan generally sets forth equipment, pressures, trajectories and/or other parameters that define the drilling process for the wellsite. The drilling operation may then be performed according to the drilling plan. However, as information is gathered, the drilling operation may need to deviate from the drilling plan. Additionally, as drilling or other operations are performed, the subsurface conditions may change. The earth model may also need adjustment as new information is collected

The data gathered by sensors (S) may be collected by surface unit 134 and/or other data collection sources for analysis or other processing. The data collected by sensors (S) may be used alone or in combination with other data. The data may be collected in one or more databases and/or transmitted on or offsite. The data may be historical data, real time data, or combinations thereof. The real time data may be used in real time, or stored for later use. The data may also be combined with historical data or other inputs for further analysis. The data may be stored in separate databases, or combined into a single database.

Surface unit 134 may include transceiver 137 to allow communications between surface unit 134 and various portions of the oilfield 100 or other locations. Surface unit 134 may also be provided with or functionally connected to one or more controllers (not shown) for actuating mechanisms at oilfield 100. Surface unit 134 may then send command signals to oilfield 100 in response to data received. Surface unit 134 may receive commands via transceiver 137 or may itself execute commands to the controller. A processor may be provided to analyze the data (locally or remotely), make the decisions and/or actuate the controller. In this manner, oilfield 100 may be selectively adjusted based on the data collected. This technique may be used to optimize portions of the field operation, such as controlling drilling, weight on bit, pump rates, or other parameters. These adjustments may be made automatically based on computer protocol, and/or manually by an operator. In some cases, well plans may be adjusted to select optimum operating conditions, or to avoid problems.

Fig. 2c illustrates a wireline operation being performed by wireline tool 106.3 suspended by rig 128 and into wellbore 136 of Fig. 2b. Wireline tool 106.3 is adapted for deployment into wellbore 136 for generating well logs, performing downhole tests and/or collecting samples. Wireline tool 106.3 may be used to provide another method and apparatus for performing a seismic survey operation. Wireline tool 106.3 may, for example, have an explosive, radioactive, electrical, or acoustic energy source 144 that sends and/or receives electrical signals to surrounding subterranean formations 102 and fluids therein.

Wireline tool 106.3 may be operatively connected to, for example, geophones 118 and a computer 122.1 of a seismic truck 106.1 of Fig. 2a. Wireline tool 106.3 may also provide data to surface unit 134. Surface unit 134 may collect data generated during the wireline operation and may produce data output 135 that may be stored or transmitted. Wireline tool 106.3 may be positioned at various depths in the wellbore 136 to provide a survey or other information relating to the subterranean formation 102.

Sensors (S), such as gauges, may be positioned about oilfield 100 to collect data relating to various field operations as described previously. As shown, sensor S is positioned in wireline tool 106.3 to measure downhole parameters which relate to, for example porosity, permeability, fluid composition and/or other parameters of the field operation.

Fig. 2d illustrates a production operation being performed by production tool 106.4 deployed from a production unit or Christmas tree 129 and into completed wellbore 136 for drawing fluid from the downhole reservoirs into surface facilities 142. The fluid flows from reservoir 104 through perforations in the casing (not shown) and into production tool 106.4 in wellbore 136 and to surface facilities 142 via gathering network 146.

Sensors (S), such as gauges, may be positioned about oilfield 100 to collect data relating to various field operations as described previously. As shown, the sensor (S) may be positioned in production tool 106.4 or associated equipment, such as Christmas tree 129, gathering network 146, surface facility 142, and/or the production facility, to measure fluid parameters, such as fluid composition, flow rates, pressures, temperatures, and/or other parameters of the production operation.

Production may also include injection wells for added recovery. One or more gathering facilities may be operatively connected to one or more of the wellsites for selectively collecting downhole fluids from the wellsite(s).

While Figs. 2b-2d illustrate tools used to measure properties of an oilfield, it will be appreciated that the tools may be used in connection with non-oilfield operations, such as gas fields, mines, aquifers, storage, or other subterranean facilities. Also, while certain data acquisition tools are depicted, it will be appreciated that various measurement tools capable of sensing parameters, such as seismic two-way travel time, density, resistivity, production rate, etc., of the subterranean formation and/or its geological formations may be used. Various sensors (S) may be located at various positions along the wellbore and/or the monitoring tools to collect and/or monitor the desired data. Other sources of data may also be provided from offsite locations.

The field configurations of Figs. 2a-2d are intended to provide a brief description of an example of a field usable with oilfield application frameworks. Part, or all, of oilfield 100 may be on land, water, and/or sea. Also, while a single field measured at a single location is depicted, oilfield applications may be utilized with any combination of one or more oilfields, one or more processing facilities and one or more wellsites.

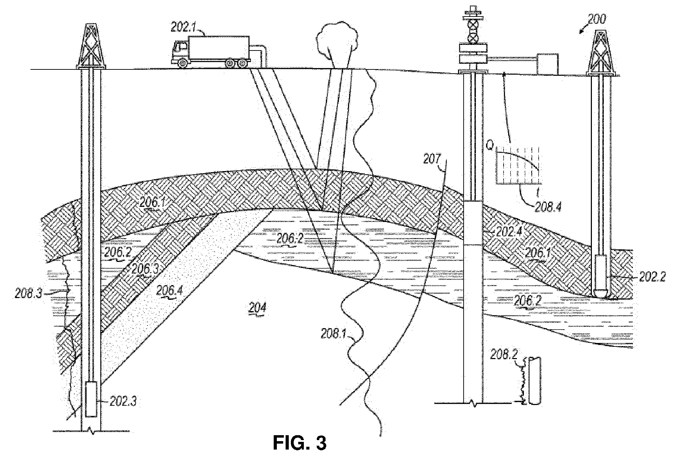

Fig. 3 illustrates a schematic view, partially in cross section of oilfield 200 having data acquisition tools 202.1, 202.2, 202.3 and 202.4 positioned at various locations along oilfield 200 for collecting data of subterranean formation 204 in accordance with implementations of various technologies and techniques described herein. Data acquisition tools 202.1-202.4 may be the same as data acquisition tools 106.1-106.4 of Figs. 2a-2d, respectively, or others not depicted. As shown, data acquisition tools 202.1-202.4 generate data plots or measurements 208.1-208.4, respectively. These data plots are depicted along oilfield 200 to demonstrate the data generated by the various operations.

Data plots 208.1-208.3 are examples of static data plots that may be generated by data acquisition tools 202.1-202.3, respectively, however, it should be understood that data plots 208.1-208.3 may also be data plots that are updated in real time. These measurements may be analyzed to better define the properties of the formation(s) and/or determine the accuracy of the measurements and/or for checking for errors. The plots of each of the respective measurements may be aligned and scaled for comparison and verification of the properties.

Static data plot 208.1 is a seismic two-way response over a period of time. Static plot 208.2 is core sample data measured from a core sample of the formation 204. The core sample may be used to provide data, such as a graph of the density, porosity, permeability, or some other physical property of the core sample over the length of the core. Tests for density and viscosity may be performed on the fluids in the core at varying pressures and temperatures. Static data plot 208.3 is a logging trace that generally provides a resistivity or other measurement of the formation at various depths.

A production decline curve or graph 208.4 is a dynamic data plot of the fluid flow rate over time. The production decline curve generally provides the production rate as a function of time. As the fluid flows through the wellbore, measurements are taken of fluid properties, such as flow rates, pressures, composition, etc.

Other data may also be collected, such as historical data, user inputs, economic information, and/or other measurement data and other parameters of interest. As described below, the static and dynamic measurements may be analyzed and used to generate models of the subterranean formation to determine characteristics thereof. Similar measurements may also be used to measure changes in formation aspects over time.

The subterranean structure 204 has a plurality of geological formations 206.1-206.4. As shown, this structure has several formations or layers, including a shale layer 206.1, a carbonate layer 206.2, a shale layer 206.3 and a sand layer 206.4. A fault 207 extends through the shale layer 206.1 and the carbonate layer 206.2. The static data acquisition tools are adapted to take measurements and detect characteristics of the formations.

While a specific subterranean formation with specific geological structures is depicted, it will be appreciated that oilfield 200 may contain a variety of geological structures and/or formations, sometimes having extreme complexity. In some locations, generally below the water line, fluid may occupy pore spaces of the formations. Each of the measurement devices may be used to measure properties of the formations and/or its geological features. While each acquisition tool is shown as being in specific locations in oilfield 200, it will be appreciated that one or more types of measurement may be taken at one or more locations across one or more fields or other locations for comparison and/or analysis.

The data collected from various sources, such as the data acquisition tools of Fig. 3, may then be processed and/or evaluated. Generally, seismic data displayed in static data plot 208.1 from data acquisition tool 202.1 is used by a geophysicist to determine characteristics of the subterranean formations and features. The core data shown in static plot 208.2 and/or log data from well log 208.3 are generally used by a geologist to determine various characteristics of the subterranean formation. The production data from graph 208.4 is generally used by the reservoir engineer to determine fluid flow reservoir characteristics. The data analyzed by the geologist, geophysicist and the reservoir engineer may be analyzed using modeling techniques.

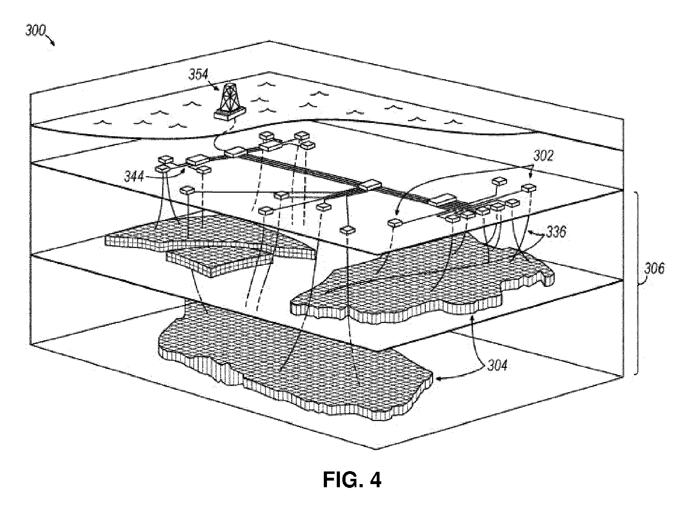

Fig. 4 illustrates an oilfield 300 for performing production operations in accordance with implementations of various technologies and techniques described herein. As shown, the oilfield has a plurality of wellsites 302 operatively connected to central processing facility 354. The oilfield configuration of Fig. 4 is not intended to limit the scope of the oilfield application system. Part or all of the oilfield may be on land and/or sea. Also, while a single oilfield with a single processing facility and a plurality of wellsites is depicted, any combination of one or more oilfields, one or more processing facilities and one or more wellsites may be present.

Each wellsite 302 has equipment that forms wellbore 336 into the earth. The wellbores extend through subterranean formations 306 including reservoirs 304. These reservoirs 304 contain fluids, such as hydrocarbons. The wellsites draw fluid from the reservoirs and pass them to the processing facilities via surface networks 344. The surface networks 344 have tubing and control mechanisms for controlling the flow of fluids from the wellsite to processing facility 354.

### Georeferenced Bookmark Management

In general, embodiments of the invention may generate a georeferenced bookmark corresponding to a visualization of geological and geographical data generated by a GGVI application executing on a client computer. Furthermore, embodiments of the invention may restore a state of a visualization of geological and geographical data based at least in part on a georeferenced bookmark. A bookmark may represent a state of a visualization of geological and geographical data. In turn, a georeferenced bookmark stores data indicating a state of a visualization of geological and geographical data that defines the visualization in physical space (i.e., in relation to a spatial location such as map coordinates). Consistent with embodiments of the invention, the georeferenced bookmark includes an image of the visualization, where the image is a georeferenced image, such that the image provides spatial relation of the visualization relative to a map and/or other such spatial view. Consistent with some embodiments of the invention, the georeferenced image may be of the GeoTiff format standard or other such georeferencing formatting standards. In general, the georeferenced image includes embedded data that provides information about a map projection, coordinate system, ellipsoid, and/or other such data to establish the spatial reference of the georeferenced image.

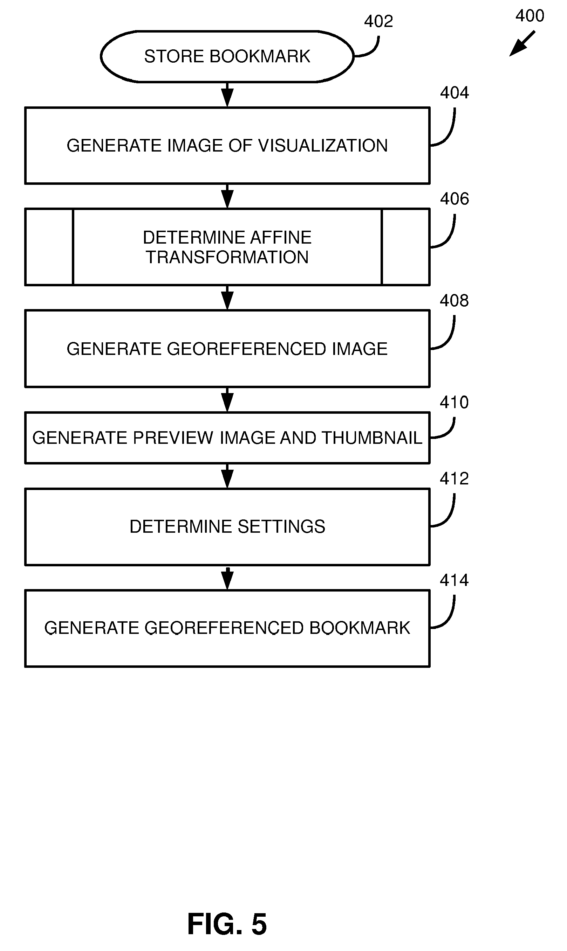

Referring to Fig. 5, this figure provides a flowchart 400 that illustrates a sequence of operations that may be performed by the client computer and/or server of the data processing system 10 to generate a georeferenced bookmark corresponding to a visualization of geophysical and geological data consistent with embodiments of the invention. The data processing system may receive a request to store a bookmark (block 402). A user of the data processing system may request to store a bookmark via a user interface of the data processing system (e.g., selecting a U/I element to store a bookmark with a mouse). Consistent with embodiments of the invention, the data processing system may generate an image of the visualization (block 404). In general, the data processing system executing a GGVI application may output a visualization of geophysical and geological data in a display window of a display associated with the data processing system. The display window may comprise a plurality of pixels, and some embodiments of the image may generate an image of the visualization based on the pixels of the display window that are displaying the visualization. For example, the display window may correspond to the X Window core protocol standard, such that a generated image of the visualization may be structured as an XImage corresponding to an X Window System pixel map of the pixels of the display window, as defined in the X Window core protocol.

The data processing system determines an affine transformation for the visualization (block 406). In general, an affine transformation refers to a function between spaces which preserves the affine structure in the spaces - i.e., an affine transformation preserves ratio of distances between elements. In the case of the visualization, an affine transformation preserves an aspect ratio of the visualization in any image derived therefrom. Consistent with embodiments of the invention, the data processing system may determine an affine transformation corresponding to the visualization and/or image of the visualization that maintains the aspect ratio and therefore the relative distances of elements of the visualization.

Based at least in part on the affine transformation, the data processing system generates a georeferenced image (block 408) of the visualization of the geophysical and geological data. In some embodiments, the affine transformation may be imbedded in the georeferenced image such that an aspect ratio of the visualization may be indicated in the georeferenced image. In general, the georeferenced image includes data associated with map projection information, coordinate system information, and/or other such information that establishes a spatial reference for the georeferenced image. Consistent with embodiments of the invention, the georeferenced image may include information that establishes the georeferenced image in a map view of an oil field and/or other such types of spatial views. In some embodiments of the invention, the data processing system may generate a preview image and/or a thumbnail image based on the georeferenced image (block 410), where such preview and/or thumbnail images may comprise an aspect ratio corresponding to the georeferenced image and the visualization.

As discussed previously, a bookmark may store one or more settings associated with the visualization and/or the GGVI application at the time of the bookmark storage request. Therefore, the data processing system may determine one or more settings associated with the visualization and/or the GGVI application (block 412). Settings that may be associated with the visualization and/or the GGVI application include, for example, type(s) of data to be displayed, features displayed, interpretations, other edits, display preferences, etc. Types of data that may be displayed may include, for example, processed and/or raw seismic data, borehole data, and/or other such types of geophysical/geological data. Features displayed may be geological, geophysical, and/or survey features such as wells, boreholes, markers, surface, geological features, and/or other such features. Interpretations and other edits may include annotations to the visualization may by the user, such as labels, markers, horizons, faults, and/or other such annotations. Display preferences may include graphic traits associated with the visualization, such as color/color schemes, line thicknesses, zoom factors, text fonts, and/or other such display preferences.

The data processing system generates a georeferenced bookmark including the determined settings and the georeferenced image (block 414). In some embodiments, the georeferenced bookmark may include a thumbnail image and/or preview image associated with the georeferenced image. Moreover, the georeferenced bookmark may include map data that identifies a geographic region and/or other such spatial region associated with the georeferenced bookmark.

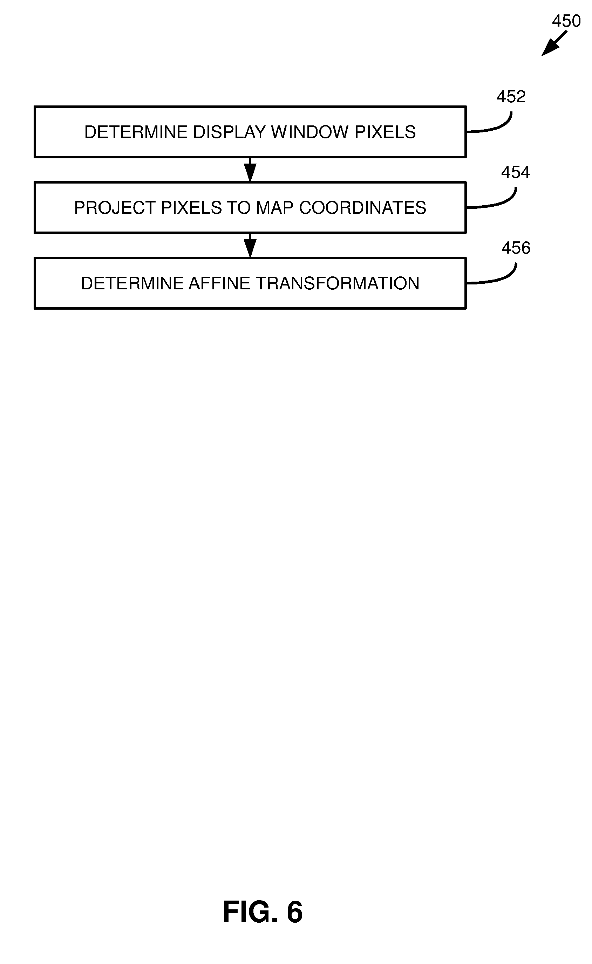

Fig. 6 provides a flowchart 450 that illustrates a sequence of operations that may be performed by the data processing system 10 to determine an affine transformation associated with a visualization of geophysical and geological data consistent with embodiments of the invention. The data processing system determines the display window pixels associated with the visualization (block 452), and the data processing system converts the pixels displaying the visualization to coordinates (block 454). In general, the visualization may be associated with a map, such as a map of an oil field. The data processing system may project pixels of the visualization to coordinates of the map (e.g., projected x,y coordinates). The projection between the pixels of the display window associated with the visualization and the coordinates may be used to determine the affine transformation (block 456).

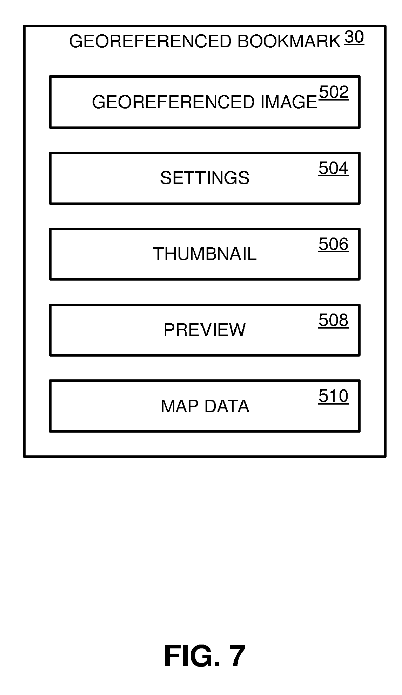

Turning now to Fig. 7, this figure provides a block diagram that illustrates data components that may be included in a georeferenced bookmark 30 consistent with embodiments of the invention. As shown, the georeferenced bookmark 30 may include a georeferenced image 502, where the georeferenced image 502 generally corresponds to a visualization of geophysical and geological data and includes information that establishes the spatial location of the georeferenced image relative to a map or other such spatial view. The georeferenced bookmark 30 may further include settings 504 associated with a visualization of geophysical and geological data and/or a GGVI application. In some embodiments, the georeferenced bookmark 30 may include a thumbnail image 506 and/or a preview image 508. The thumbnail image 506 and/or preview image 508 may be displayed for a user by the GGVI application and/or other application when the user is selecting a particular georeferenced bookmark 30 to restore within the GGIV application or other application. In addition, the georeferenced bookmark 30 may include map data 510, where the map data identifies a geographic region and/or map to which the geographic bookmark corresponds.

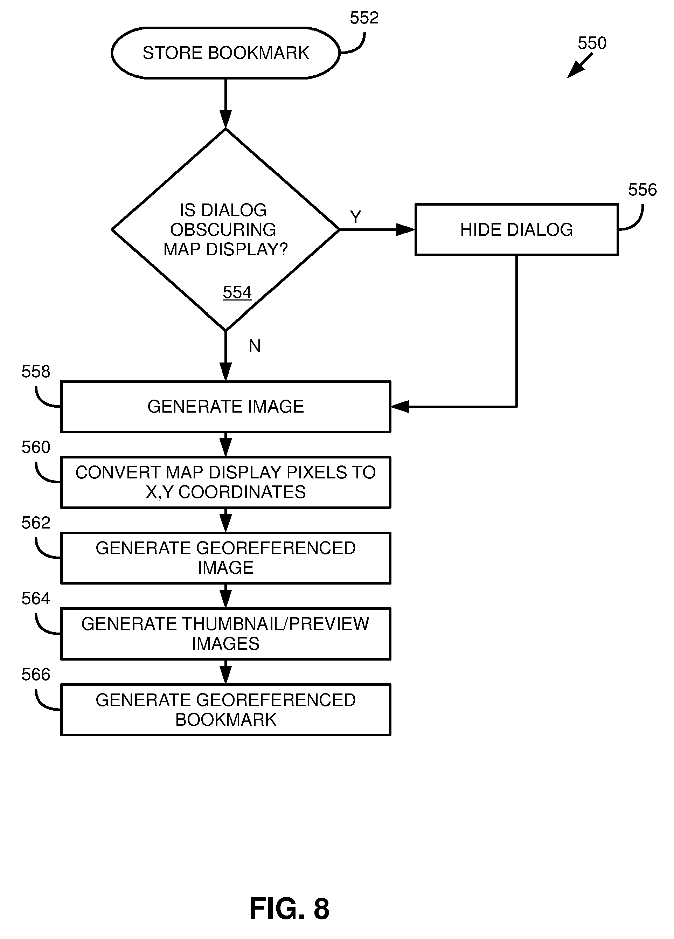

Fig. 8 provides a flowchart 550 that illustrates a sequence of operations that may be performed by the data processing system 10 consistent with some embodiments of the invention to generate a georeferenced bookmark for a visualization of geophysical and geological data represented on a map display. The data processing system may receive a request to store a bookmark for the visualization (block 552). The data processing system determines whether a user interface dialog element of the display is obscuring the view of the visualization on the map display (block 554). In response to determining that a user interface dialog element is obscuring the map display ("Y" branch of block 554), the data processing system hides the user interface dialog element (block 556).

In response to determining that a user interface dialog element is not obscuring the map display ("N" branch of block 554) or after hiding a user interface dialog element (i.e., block 556), the data processing system generates an image of the visualization (block 558). The data processing system converts pixels of the map display that is presenting the visualization to map coordinates (block 560), and the data processing system generates a georeferenced image of the visualization based at least in part on the map coordinates (block 562). The data processing system generates thumbnail and/or preview images of the georeferenced image, and the data processing system generates a georeferenced bookmark including the georeferenced image, the thumbnail image and/or the preview image (block 566).

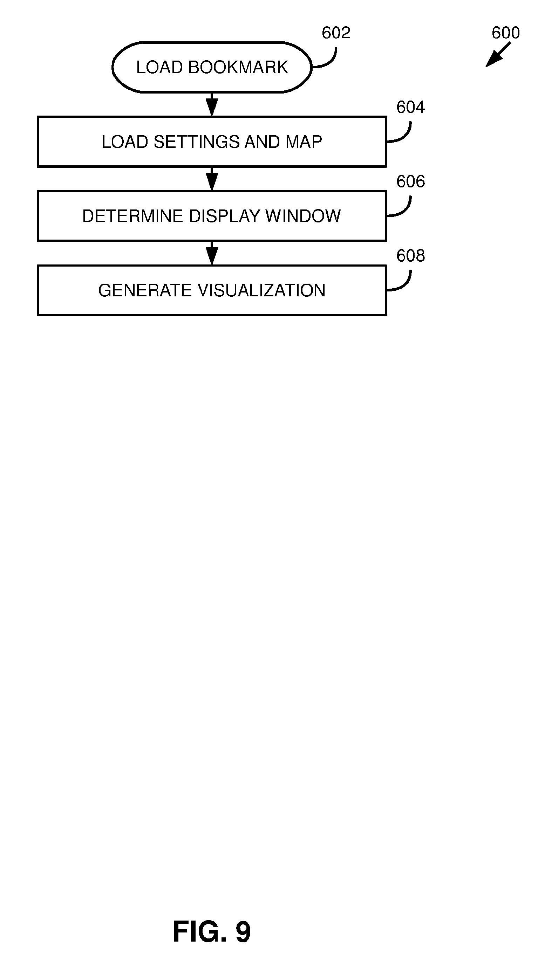

Fig. 9 provides a flowchart 600 that illustrates a sequence of operations that may be performed by the data processing system 10 consistent with some embodiments of the invention to restore a visualization of geophysical and geological data in a display window consistent with embodiments of the invention. The data processing system receives a request to load a particular georeferenced bookmark (block 602). The data processing system may load stored settings included in the georeferenced bookmark and a map or other spatial view associated with the georeferenced bookmark (block 604). The data processing system determines the display window (block 606), and the data processing system generates a visualization that corresponds to the georeferenced image of the georeferenced bookmark (block 608). In general, map data stored in the georeferenced bookmark may be utilized to generate the visualization for display, where the display of the visualization by the data processing system will correspond to the same geographical region as the georeferenced image of the georeferenced bookmark. Consistent with embodiments of the invention, the restored visualization may comprise a common aspect ratio as a visualization upon which the georeferenced bookmark is derived. Moreover, upon restoration, the visualization is positioned within the display window according to spatial positioning information of the georeferenced bookmark.

Therefore, embodiments of the invention manage georeferenced bookmarks corresponding to visualizations of geophysical and geological data. A georeferenced bookmark may be generated by embodiments of the invention, where the georeferenced bookmark includes a georeferenced image. Furthermore, a visualization of geophysical and geological data may be restored based on a georeferenced bookmark. While particular embodiments have been described, it is not intended that the invention be limited thereto, as it is intended that the invention be as broad in scope as the art will allow and that the specification be read likewise. It will therefore be appreciated by those skilled in the art that yet other modifications could be made without deviating from its spirit and scope as claimed.

## Claims

1. A method for managing georeferenced bookmarks, the method comprising:
in response to receiving a request to store a bookmark for a visualization of geological and geophysical data, determining, with at least one processor, an affine transformation that maintains an aspect ratio of the visualization;
generating, with the at least one processor, a georeferenced image for the visualization based at least in part on the affine transformation such that the georeferenced image maintains the aspect ratio of the visualization; and
generating, with the at least one processor, a georefererenced bookmark that includes the georeferenced image.

2. The method of claim 1, further comprising:
generating, with the at least one processor, a thumbnail image based at least in part on the georeferenced image, wherein the thumbnail image maintains the aspect ratio of the visualization, and the georeferenced bookmark includes the thumbnail image.

3. The method of claim 1, wherein the visualization is output in a display window by a plurality of pixels, and determining the affine transformation that maintains the aspect ratio of the visualization is based at least in part on the plurality of pixels.

4. The method of claim 3, wherein the visualization of the geological and geophysical data includes a map having geological and geophysical data mapped to map coordinates of the map, and determining the affine transform that maintains the aspect ratio of the visualization is based at least in part on a mapping between the plurality of pixels and the map coordinates.

5. The method of claim 1, wherein generating the georeferenced image for the visualization based at least in part on the affine transform such that the georeferenced image maintains the aspect ratio of the visualization comprises:
generating an image of the visualization;
generating metadata based at least in part on the affine transform for the image of the visualization; and
embedding the metadata in the image of the visualization to generate the georeferenced image of the visualization.

6. The method of claim 1, further comprising:
prior to generating the georeferenced image for the visualization, determining whether a user interface dialog element is obscuring display of the visualization; and
in response to determining that the user interface dialog element is obscuring display of the visualization, hiding the user interface dialog element.

7. The method of claim 6 further comprising:
restoring the hidden user interface dialog element after generating the georeferenced bookmark.

8. The method of claim 1, wherein the georeferenced bookmark includes one or more saved settings corresponding to an application displaying the visualization.

9. The method of claim 8, wherein the settings include at least one type of data to be visualized, at least one feature to be visualized, at least one annotation made by a user corresponding to the geological and geophysical data of the visualization, and at least one display preference corresponding to the visualization.

10. The method of claim 8, wherein the settings include at least one type of data to be visualized, and the at least one type of data comprises at least one of seismic data and borehole data.

11. The method of claim 8, wherein the settings include at least one feature to be visualized, and the at least one feature to visualized comprises at least one of a geological feature, a geophysical feature, a survey feature, a well, a borehole, a marker, a surface.

12. The method of claim 1, wherein the visualization is a first visualization, the method further comprising:
in response to receiving a request to restore the georeferenced bookmark, generating a second visualization of geological and geophysical data based at least in part on the georeferenced bookmark, wherein the first visualization and the second visualization are configured with the same aspect ratio.

13. An apparatus comprising:
at least one processor; and
program code configured to be executed by the at least one processor to cause the at least one processor to determine an affine transformation that maintains an aspect ratio of a visualization of geological and geophysical data responsive to receiving a request to store a bookmark for the visualization, generate a georeferenced image for the visualization based at least in part on the affine transformation such that the georeferenced image maintains the aspect ratio of the visualization, and generate a georeferenced bookmark that includes the georeferenced image.

14. The apparatus of claim 13, wherein the program code is further configured to cause the at least one processor to generate a thumbnail image based at least in part on the georeferenced image, wherein the thumbnail image maintains the aspect ratio of the visualization, and the georeferenced bookmark includes the thumbnail image.

15. The apparatus of claim 13, wherein the visualization is output in a display window associated with a plurality of pixels, and the program code is configured to determine the affine transformation that maintains the aspect ratio of the visualization based at least in part on the plurality of pixels.

16. The apparatus of claim 15, wherein the visualization of the geological and geophysical data includes a map having geological and geophysical data mapped to map coordinates of the map, and the program code is configured to determine the affine transformation based at least in part on a mapping between the plurality of pixels and the map coordinates.

17. The apparatus of claim 13, wherein the program code is configured to generate the georeferenced image for the visualization by:
generating an image of the visualization, and
embedding data associated with the affine transformation in the image of the visualization to generate the georeferenced image of the visualization.

18. The apparatus of claim 13, wherein the georeferenced bookmark includes one or more settings corresponding to an application displaying the visualization.

19. The apparatus of claim 18, wherein the settings include at least one type of data to be visualized, and the at least one type of data comprises at least one of seismic data and borehole data.

20. A program product comprising:
a computer readable storage medium;
program code stored on the computer readable storage medium and configured upon execution to cause at least one processor to determine an affine transformation that maintains an aspect ratio of a visualization of geological and geophysical data responsive to receiving a request to store a bookmark for the visualization, generate a georeferenced image for the visualization based at least in part on the affine transformation such that the georeferenced image maintains the aspect ratio of the visualization, and generate a georeferenced bookmark that includes the georeferenced image.
